# EUROPÄISCHE PATENTSCHRIFT

(11) **EP 1 080 827 B1**
(45) Veröffentlichungstag und Bekanntmachung des Hinweises auf die Patenterteilung: **29.06.2005**
(21) Anmeldenummer: 00115076.2
(22) Anmeldetag: 27.07.2000
(51) Int. Cl.: B23Q 1/00, B23Q 5/04, B23Q 11/10

(54) **Bearbeitungseinheit einer Werkzeugmaschine**
Working unit of a machine tool
Unité de travail d'une machine-outil

(30) Priorität: 26.08.1999 DE 29914930 U
(43) Veröffentlichungstag der Anmeldung: 07.03.2001
(73) Patentinhaber: DECKEL MAHO Pfronten GmbH, 87459 Pfronten (DE)
(72) Erfinder: Hoppe, Gerd, 34317 Habichtswald (DE)
(74) Vertreter: Beetz & Partner Patentanwälte

(56) Entgegenhaltungen:
- DE-U- 29 609 893
- DE-U- 29 812 170
- FR-A- 2 687 338
- US-A- 4 709 465

## Beschreibung

Die Erfindung betrifft eine Bearbeitungseinheit einer Universal-Fräs- und Bohrmaschine der im Oberbegriff des Patentanspruchs 1 angegebenen Gattung.

Um auch bei herkömmlichen Fräs- und Bohrmaschinen eine Hochgeschwindigkeitsbearbeitung mit Spindeldrehzahlen von z. B. 30 000 U/min und mehr durchführen zu können, sind gesonderte Vorsatzeinheiten mit einer darin integrierten schnelllaufenden Zusatzspindel, einer sog. HS-Spindel, bekannt, die bei Bedarf in die normale Arbeitsspindel der Fräs- und Bohrmaschine eingewechselt werden kann. Die Versorgung derartiger Vorsatzeinheiten mit Arbeitsmitteln, wie z. B. Kühlmittel, Schmiermittel, Hydraulikfluid, Druckluft u. dgl., kann über an sich bekannte kuppelbare Steckverbinder zwischen der Vorsatzeinheit und dem Spindelgehäuse erfolgen. Derartige Steckverbindungen müssen jedoch auch bei den während der Bearbeitung auftretenden Belastungen fest verbunden bleiben, damit durch Undichtigkeiten oder unerwünschte Leitungsunterbrechungen verursachte Betriebsstörungen verhindert werden.

Aus dem 298 12 170 U ist eine Bearbeitungseinheit mit einer auswechselbaren Motorspindel für eine Werkzeugmaschine bekannt, die eine in den Spannkegel der Arbeitsspindel einer Fräs- und Bohrmaschine einwechselbare Vorsatzeinheit darstellt. Im Gehäuse dieser Vorsatzeinheit ist eine Schnelllauf-Spindel gelagert, die von einem im Gehäuse koaxial angeordneten Elektromotor angetrieben wird. An der einen Stirnseite des Gehäuses ist ein als Spannkegel ausgebildeter Tragzapfen befestigt, mit dem diese Vorsatzeinheit in die herkömmliche Arbeitsspindel einer Fräs- und Bohrmaschine eingespannt werden kann. Die eine Vorsatzeinheit bildende Motorspindel enthält eine Spannzange zum Festspannen eines Werkzeugs oder eines Werkzeughalters, die von einem durch Druckluft bewegbaren Betätigungskolben gegen Federkraft betätigt wird. Der Betätigungskolben weist eine zentrale Durchgangsbohrung auf, die mit einer Längsbohrung der Spindel in Verbindung steht und einen in der Werkzeugaufnahme der Spindel ausmündenden Strömungspfad bildet. Die Zufuhr von Arbeitsmedien erfolgt durch seitlich am Gehäuse befestigte Anschlusselemente und innerhalb der Gehäusewandung koaxial zur Spindel verlaufende Kanäle.

Ferner ist aus der US 4 709 465 ein Maschinensystem zur universellen Fräsbearbeitung von Werkstücken in fünf Achsen bekannt, das einen in mehreren Richtungen motorisch verfahrbaren Kopf mit einer in dessen Gehäuse gelagerten Antriebswelle aufweist. Der Kopf hat eine plane Endfläche, an welcher eine Vielzahl von unterschiedlichen Bearbeitungseinheiten angeflanscht werden können. Die im Kopf gelagerte Antriebswelle endet in der Stirnfläche des Kopfes und weist Kupplungselemente für den formschlüssigen Anschluss einer in der jeweiligen Bearbeitungseinheit vorhandenen Welle oder Arbeitsspindel auf. Zur festen Fixierung der jeweiligen Bearbeitungseinheit an der Stirnfläche des Kopfes sind mehrere Spannzangen in gegenseitiger Winkelversetzung um die Antriebswelle im Kopf angeordnet, deren endseitige Spannbacken Anzugsbolzen umgreifen, die in der jeweiligen Gegenfläche der ausgewählten Bearbeitungseinheit vorstehend befestigt sind. Mithilfe der insgesamt vier Spannzangen wird die jeweils ausgewählte Bearbeitungseinheit fest mit der Endplatte des Kopfes verbunden. Zur Zuleitung der in inneren Kanälen im Kopf geführten Arbeitsmedien zu der jeweiligen Bearbeitungseinheit sind Steckanschlüsse in der Kopfplatte vorgesehen, die mit entsprechenden Steckanschlüssen in der Endplatte der jeweiligen Bearbeitungseinheit in abgedichteten Eingriff gelangen.

Aufgabe der Erfindung ist es, eine gattungsgemäße Bearbeitungseinheit zu schaffen, die eine sichere Verbindung der am Spindelgehäuse vorgesehenen Steckanschlüsse mit den an der Vorsatzeinheit angeordneten Gegenanschlüssen gewährleistet.

Diese Aufgabe wird erfindungsgemäß durch die im Anspruch 1 angegebenen Merkmale gelöst.

Mit der Erfindung wird erreicht, dass die beim Einsatz einer Vorsatzeinheit in die Arbeitsspindel einer Werkzeugmaschine automatisch miteinander kuppelbaren Steckverbindungen zum Anschluss der Vorsatzeinheit an die Arbeitsmittelversorgung auch während der Bearbeitung sicher miteinander verbunden bleiben. Dadurch kann eine sichere und störungsfreie Versorgung der Vorsatzeinheit mit z. B. Kühlmittel zur Kühlung eines Zusatzantriebs, Hydraulikfluid zur Betätigung von Spanneinrichtungen, Druckluft zur Reinigung von Spannkegeln an einer Zusatzspindel, Kühlschmierstoffen für die Zufuhr zur Bearbeitungsstelle u. dgl. gewährleistet werden. Die Spanneinheit zur lösbaren Halterung eines an dem Anschlussteil angeordneten Anzugsbolzen kann wie ein in der Arbeitsspindel integrierter automatischer Werkzeugspanner aufgebaut sein, über den ein an der Vorsatzeinheit angeordneter Spannkegel in der Arbeitsspindel gespannt wird. Damit kann z. B. die hydraulische Ansteuerung der Spanneinheit zum Lösen des Anschlussteils auf einfache Weise mit einer entsprechenden Ansteuerung des Werkzeugspanners zum Lösen der Klemmung des Spannkegels koordiniert werden, wodurch sich der Steuerungsaufwand reduziert.

In einer zweckmäßigen Ausführungsform ist an einem der beiden Anschlusselemente eine Nut für den durch einen Dichtungsring abgedichteten Eingriff eines an dem anderen Anschlussteil vorgesehenen Stegs angeordnet. Wenn die beiden Anschlussteile durch die Spanneinrichtung verbunden sind, kann somit verhindert werden, dass die Steckverbinder durch die während der Bearbeitung anfallenden Bearbeitungsrückstände oder Kühlschmiermittel verschmutzt werden.

Weitere Besonderheiten und Vorzüge der Erfindung ergeben sich aus der folgenden Beschreibung eines bevorzugten Ausführungsbeispiels anhand der Zeichnung. Es zeigt:
- Fig. 1: eine zum Teil geschnittene Seitenansicht eines verschwenkbaren Fräskopfs einer Universal-Fräs- und Bohrmaschine mit Vorsatzeinheit;
- Fig. 2: eine Draufsicht auf den Fräskopf mit Vorsatz-einheit von Fig. 1;
- Fig. 3: eine Vorderansicht der Arbeitsspindel mit den Steckanschlüssen; und
- Fig. 4: eine Rückansicht der Vorsatzeinheit mit den zu den Steckanschlüssen komplementären Gegenanschlüssen.

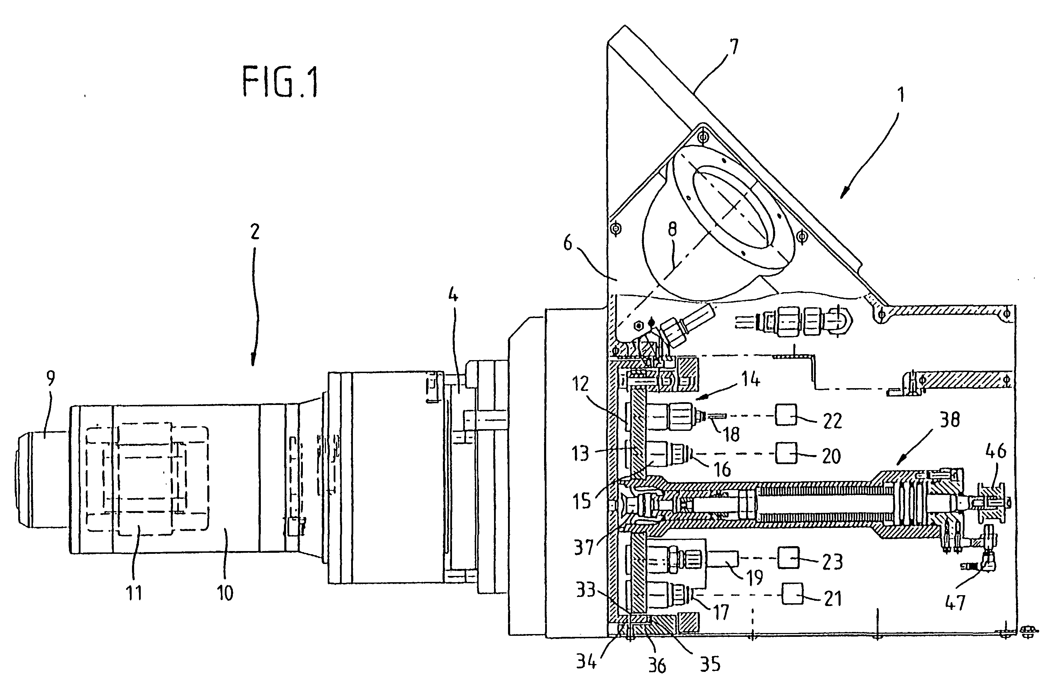

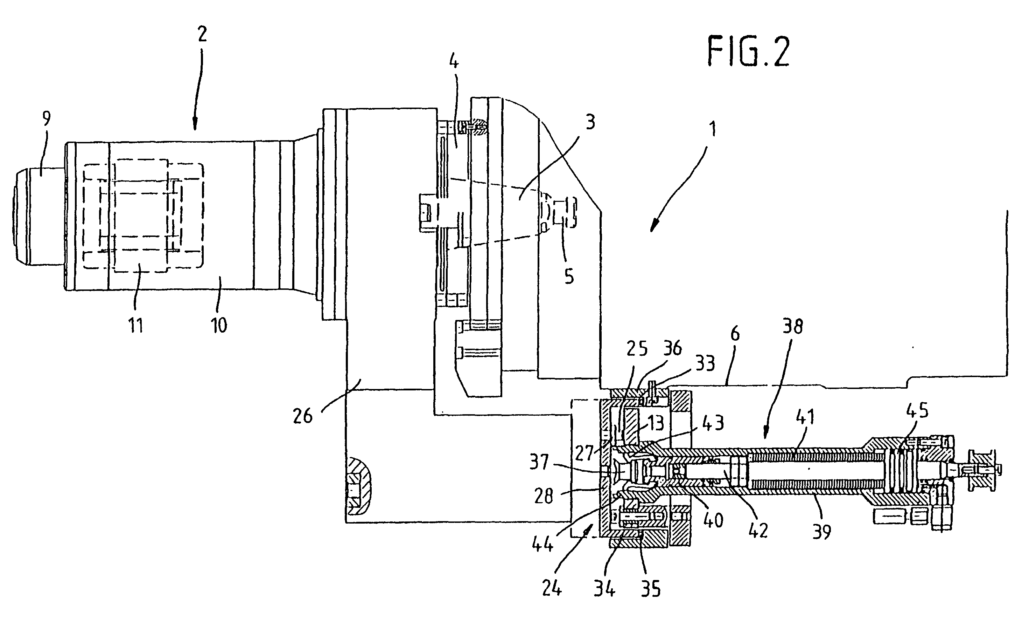

Die in Fig. 1 schematisch dargestellte Bearbeitungseinheit einer Universal-Fräs- und Bohrmaschine enthält einen Fräskopf 1 und eine auswechselbare Vorsatzeinheit 2, die über einen in Fig. 2 gestrichelt dargestellten und auch bei herkömmlichen Werkzeugaufnahmen verwendeten Spannkegel 3 in eine Arbeitsspindel 4 des Fräskopfs 1 eingesetzt ist. Die Fixierung der Vorsatzeinheit 2 am Fräskopf 1 kann über herkömmliche automatische Werkzeugspanner erfolgen, bei denen z.B. ein am Spannkegel 3 angeordneter Anzugsbolzen 5 von einer in der Arbeitsspindel 4 integrierten Spannzange einer automatischen Schnellspanneinrichtung gehalten wird. Die Arbeitsspindel 4 ist in einem Spindelgehäuse 6 des Fräskopfs 1 drehbar gelagert und wird durch einen nicht dargestellten Motor angetrieben. Das Spindelgehäuse 6 weist eine unter 45° geneigte Auflagefläche 7 auf, über die der Fräskopf 1 an einer ebenfalls unter 45° geneigten Vorderwand eines nicht dargestellten Tragelements einer Universal-Fräs- und Bohrmaschine um eine 45°-Achse 8 verdrehbar ist. Durch entsprechende Drehung des Fräskopfs 1 um die Achse 8 kann die Arbeitsspindel 4 zwischen einer in Fig. 1 gezeigten horizontalen Bearbeitungsstellung und einer vertikalen Bearbeitungsstellung verschwenkt werden. Die bei Bedarf in die Arbeitsspindel 4 einsetzbare Vorsatzeinheit 2 enthält eine für hohe Drehzahlen ausgelegte Vorsatzspindel 9, die in einem Gehäuse 10 verdrehbar gelagert und durch einen gestrichelt dargestellten Motor 11 drehangetrieben ist. Die Vorsatzspindel 9 weist einen geringeren Durchmesser als die Arbeitsspindel 4 auf und ist für kleinere Werkzeugaufnahmen konzipiert.

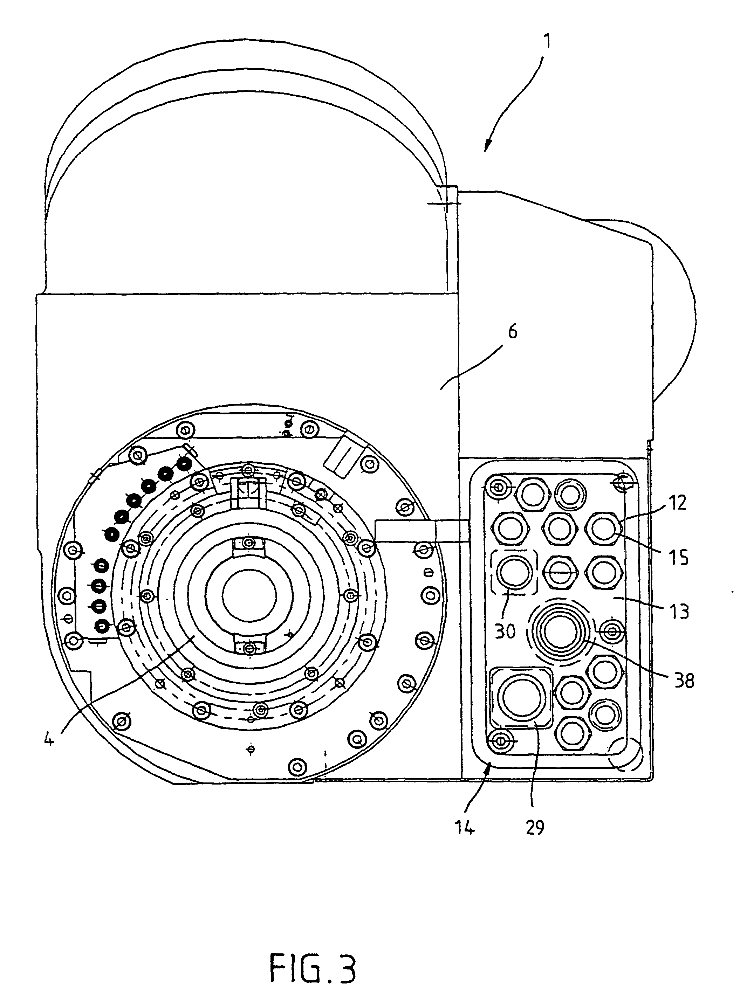

Wie besonders aus den Fig. 1 und 3 hervorgeht, ist an dem Spindelgehäuse 6 ein zur Arbeitsspindel 4 seitlich versetztes Anschlußgehäuse 14 angeordnet, das über Sechskantmuttern 12 an einer im wesentlichen rechteckigen Anschlußplatte 13 befestigte Steckanschlüsse 15 enthält. Die als Buchsen ausgebildeten Steckanschlüsse 15 sind gemäß Fig. 1 über Zu- und Rückführleitungen 16 und 17 bzw. Versorgungsleitungen 18 und 19 mit schematisch dargestellten Versorgungsaggregaten 20 bis 23 für die Versorgung der Vorsatzeinheit 2 mit Arbeitsmitteln, wie z.B. Hydraulikfluid, Druckluft, Schmiermittel, Kühlmittel oder dgl. verbunden.

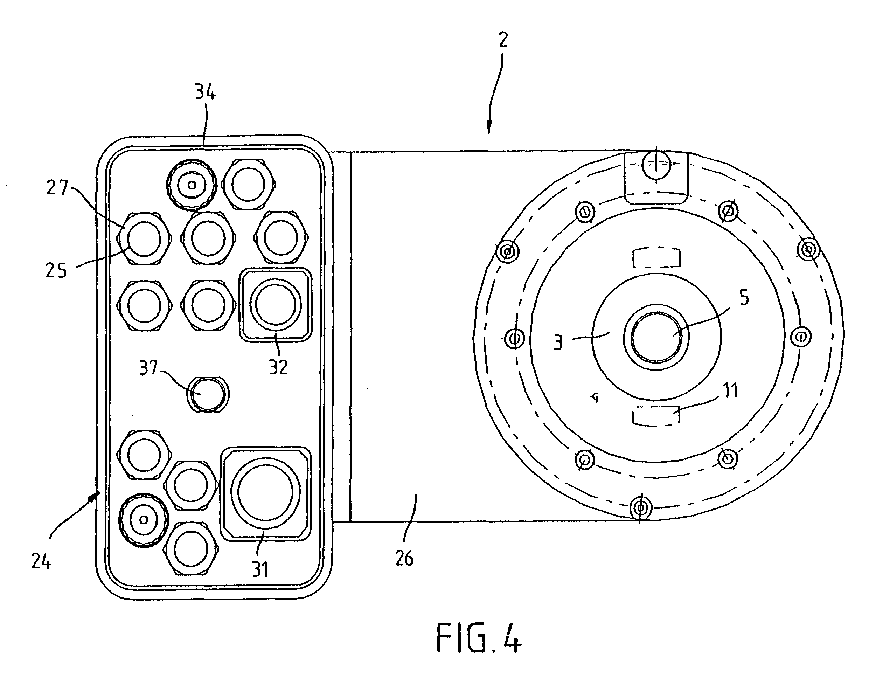

Wie in den Fig. 2 und 4 gezeigt ist, weist das Gehäuse 10 der Vorsatzeinheit 2 einen seitlichen Ansatz 26 auf, an dem ein zum Spannkegel 3 parallel versetztes zweites Anschlußteil 24 zur Verbindung mit dem am Spindelgehäuse 6 angeordneten Anschlußgehäuse 14 angeordnet ist. An dem zweiten Anschlußteil 24 sind mit den Steckanschlüssen 15 kuppelbare Gegenanschlüsse 25 zum Anschluß der Vorsatzeinheit 2 an die gemäß Fig. 1 mit den Versorgungsaggregaten 20 bis 22 verbundenen Fluidleitungen 16 bis 19 angeordnet. Die Gegenanschlüsse 25 sind als rohrförmige Stecker ausgebildet, die zum Eingriff in die entsprechenden Steckerbuchsen 15 über Sechskantmuttem 27 an einer rechteckigen Endplatte 28 des Anschlußteils 24 befestigt sind. Die Buchsen 15 und Stecker 25 zum kuppelbaren Anschluß an die Fluidleitungen sind als solche bekannt. Sie weisen automatisch betätigte Rückschlagventile auf, die in der Kupplungsstellung den Durchfluß freigeben und beim Trennen absperren. Die Rückschlagventile sind so konzipiert, daß sie eine einwandfreie Abdichtung im entkuppelten Zustand ermöglichen. Neben den Steckanschlüssen für die Fluidleitungen sind an den beiden Anschlußteilen 15 und 25 auch noch elektrische Steckverbinder mit Steckern 29, 30 und dazu komplementären Gegensteckern 31 bzw. 32 vorgesehen, durch die z.B. die Versorgung des Motors 11 mit Strom oder eine Signalübertragung zwischen Überwachungssensoren in der Vorsatzeinheit 2 und einer Steuereinrichtung an der Werkzeugmaschine ermöglicht wird

Zwischen einem vorderen Gehäuseteil 36 des Anschlußgehäuses 14 und dessen Anschlußplatte 13 ist eine umlaufende Nut 33 gebildet, in die ein am Ende des Anschlußteils 24 angeordneter Steg 34 durch einen Dichtungsring 35 abgedichtet eingreift, wenn die Vorsatzeinheit 2 gemäß Fig. 1 am Fräskopf 1 angeordnet ist. Dadurch kann verhindert werden, daß die Steckverbindungen durch die während der Bearbeitung anfallenden Kühlschmierstoffe und Bearbeitungsrückstände verschmutzt werden.

Zur sicheren Halterung der Steckanschlüsse 15 und Gegenanschlüsse 25 in ihrer Kupplungsstellung und auch zur dichten Verbindung des Anschlußteils 24 mit dem Anschlussgehäuse 14 ist an der Anschlußplatte 13 des Anschlußgehäuses 14 eine Spann-einheit 38 zur lösbaren Halterung eines an der Endplatte des Anschlußteils 24 angeordneten Anzugsbolzens 37 befestigt. Die Spanneinheit 38 umfaßt gemäß Fig. 2 eine in einem hohlzylindrischen Gehäuse 39 verschiebbare Spannbuchse 40, die am vorderen Ende einer durch ein Tellerfederpaket 41 vorgespannten Spannstange 42 befestigt ist. An dem vorderen Ende der Spannbuchse 40 sind seitlich verschwenkbare Greifer 43 angeordnet, die in ihrer Spannstellung durch einen Vorsprung 44 an der Innenwand des Gehäuses 39 nach innen zum Eingriff am Anzugsbolzen gedrückt sind. Am hinteren Ende der Spannstange ist ein Kolben 45 angeordnet, durch den die Spannstange 42 entgegen der Kraft des Tellerfederpakets 41 nach vorne gedrückt werden kann. Dabei werden die Greifer 43 nach außen gedrückt und geben den Anzugsbolzen 37 frei. An dem hinteren Ende der Spannstange 42 ist ein Überwachungselement 46 angeordnet, das mit einem berührungslosen Sensor 47 zur Überwachung der Spann- bzw. Lösestellung der Spanneinheit 38 zusammenwirkt.

Über die Spanneinheit 38 wird ein sichere Verbindung der Steckverbinder für die Arbeitsmittelversorgung beim Einsatz einer auswechselbaren Vorsatzeinheit in die Arbeitsspindel eines Spindelkopfs erreicht. Die Spanneinheit zur lösbaren Halterung der beiden Anschlußteile kann entsprechend dem Werkzeugspanner zur Fixierung von Spannkegeln in der Arbeitsspindel aufgebaut sein. Es können allerdings auch andere Spanneinrichtungen verwendet werden.

## Patentansprüche

1. Bearbeitungseinheit einer Universal-Fräs- und Bohrmaschine mit
- einer in einem Spindelgehäuse (6) eines Spindelkopfes (1) gelagerten und motorisch angetriebenen Arbeitsspindel (4),
- einer in der Arbeitsspindel (4) zentral angeordneten Spannzange zum Einspannen eines Spannkegels (3) in die Arbeitsspindel (4),
- einer mit einem Spannkegel (3) in die Arbeitsspindel (4) einwechselbaren Vorsatzeinhit (2), die eine Schnelllauf-Spindel (9) mit eigenem Antriebsmotor (11) enthält, und
- kuppelbaren Steckverbindern zwischen dem Spindelgehäuse (6) und der Vorsatzeinheit (2) zur Versorgung der Vorsatzeinheit mit Arbeitsmitteln,
**dadurch gekennzeichnet, dass**
- an dem Spindelgehäuse (6) ein zur Arbeitsspindel (4) seitlich versetztes Anschlussgehäuse (14) angeordnet ist, in dessen Anschlussplatte (13) Steckanschlüsse (15) vorgesehen sind,
- das Gehäuse (10) der Vorsatzeinheit (2) einen seitlichen Ansatz (26) mit einem zum Spannkegel (3) parallel versetzten Anschlussteil (24) aufweist, in dem mit den Steckanschlüssen (15) kuppelbare Gegenanschlüsse (25) angeordnet sind, und
- an der Anschlussplatte (13) des Anschlussgehäuses (15) eine Spanneinheit (38) zur lösbaren Halterung eines an dem Anschlussteil (24) angeordneten Anzugsbolzen (37) befestigt ist.

2. Bearbeitungseinheit nach Anspruch 1, **dadurch gekennzeichnet, dass** die Spanneinheit (38) eine in einem Gehäuse (39) über eine Spannstange (42) verschiebbare Spannbuchse (40) mit seitlich verschwenkbaren Greifern (43) zum Eingriff am Anzugsbolzen (37) enthält.

3. Bearbeitungseinheit nach Anspruch 2, **dadurch gekennzeichnet, dass** die Greifer (43) über ein an der Spannstange (42) angreifendes Tellerfederpaket (41) in eine Spannstellung beaufschlagt und über einen an der Spannstange angeordneten Kolben (45) in eine Lösestellung bewegbar sind.

4. Bearbeitungseinheit nach Anspruch 2 oder 3, **dadurch gekennzeichnet, dass** am hinteren Ende der Spannstange (42) ein mit einem berührungslosen Sensor (47) zusammenwirkendes Überwachungselement (46) zur Überwachung der Spann- und Lösestellung der Spanneinheit (38) angeordnet ist.

5. Bearbeitungseinheit nach einem der Ansprüche 2 bis 4, **dadurch gekennzeichnet, dass** die Spanneinheit (38) in einer zentralen Bohrung an der Anschlussplatte (13) angeordnet ist.

6. Bearbeitungseinheit nach einem der Ansprüche 1 bis 5, **dadurch gekennzeichnet, dass** an einem der beiden Anschlussteile (14) eine Nut (33) für den durch einen Dichtungsring (35) abgedichteten Eingriff eines dem anderen Anschlussteil (24) vorgesehenen Stegs (34) angeordnet ist.

7. Bearbeitungseinheit nach einem der Ansprüche 1 bis 6, **dadurch gekennzeichnet, dass** an den Anschlussteilen (14, 24) elektrische Stecker (29, 39) und Gegenstecker (31, 32) zur Energie- und/oder Signalübertragung zwischen dem Fräskopf (1) und der Vorsatzeinheit (2) angeordnet sind.

## Claims

1. A machining unit for a universal milling and boring machine with:
- a motor-driven work spindle (4) mounted in a spindle housing (6) of a spindle head (1),
- a collet disposed centrally in the work spindle (4) for clamping a clamping cone (3) in the work spindle (4),
- an attachment unit (2) which is interchangeable in the work spindle (4) by means of a clamping cone (3) and which contains a high-speed spindle (9) with its own drive motor (11), and
- plug connectors for coupling between the spindle housing (6) and the attachment unit (2) for the supply of working media to the attachment unit,
**characterised in that**
- there is disposed on the spindle housing (6) a connection housing (14) which is laterally offset from the work spindle (4) and in the connection plate (13) of which plug connections (15) are provided,
- the housing (10) of the attachment unit (2) has a lateral projection (26) with a connection part (24) which is offset parallel to the clamping cone (3) and in which there are disposed companion connections (25) adapted to be coupled to the plug connections (15), and
- a clamping unit (38) for releasably holding a tightening bolt (37) disposed on the connection part (24) is fixed on the connection plate (13) of the connection housing (15).

2. A machining unit according to claim 1, **characterised in that** the clamping unit (38) contains a clamping bush (40) which is displaceable in the housing (39) by means of a clamping rod (42) and which has laterally pivotable grippers (43) for engagement on the tightening bolt (37).

3. A machining unit according to claim 2, **characterised in that** the grippers (43) are biased into a clamping position by means of a set of cup springs (41) acting on the clamping rod (42) and are movable into a release position via a piston (45) disposed on the clamping rod.

4. A machining unit according to claim 2 or 3, **characterised in that** a monitoring element (48) cooperating with a contactless sensor (47) is disposed at the rear end of the clamping rod (42) to monitor the clamping and release position of the clamping unit (38).

5. A machining unit according to any one of claims 2 to 4, **characterised in that** the clamping unit (38) is disposed in a central bore on the connection plate (13).

6. A machining unit according to any one of claims 1 to 5, **characterised in that** there is provided on one of the two connection parts (14) a groove (33) for engagement of a web (34) provided on the other connection part (24), said engagement being sealed off by a sealing ring (35).

7. A machining unit according to any one of claims 1 to 6, **characterised in that** electric plugs (29, 39) and companion plugs (31, 32) for energy and/or signal transmission between the milling head (1) and the attachment unit (2) are disposed on the connection parts (14, 24).

## Revendications

1. Unité de travail d'une perceuse fraiseuse universelle comprenant
- une broche principale (4) entraînée par moteur et logée dans un boîtier à broche (6) d'un nez de broche (1),
- une pince de serrage disposée de manière centrale dans la broche principale (4) en vue de serrer un cône de serrage (3) dans la broche principale (4),
- une unité additionnelle (2) avec un cône de serrage (3) pouvant être mise en remplacement dans la broche principale (4), unité additionnelle qui comprend une broche à grande vitesse (9) avec un moteur d'entraînement propre (11), et
- des raccords enfichables pouvant être couplés entre le boîtier à broche (6) et l'unité additionnelle (2) pour l'alimentation de l'unité additionnelle (2) en fluides actifs,
**caractérisée en ce que**
- un boîtier de raccordement (14) décalé latéralement par rapport à la broche principale (4) est accolé au boîtier à broche (6), des raccords enfichables (15) étant prévus dans la plaque de raccordement (13) dudit boîtier,
- le boîtier (10) de l'unité additionnelle (2) comporte un épaulement (26) latéral avec une pièce de raccordement (24) décalée parallèlement par rapport au cône de serrage (3), pièce de raccordement dans laquelle sont disposés des contre-raccords (25) pouvant être couplés avec les raccords enfichables (15), et
- une unité de serrage (38) est fixée à la plaque de raccordement (13) du boîtier de raccordement (15) en vue d'une fixation amovible d'un embout de tirage (37) disposé au niveau de la pièce de raccordement (24).

2. Unité de travail selon la revendication 1, **caractérisée en ce que** l'unité de serrage (38) comprend une douille de serrage (40) coulissante dans un boîtier (39) sur une tige de serrage (42) avec des préhenseurs (43) pouvant pivoter latéralement en vue d'un engrènement à l'embout de tirage (37).

3. Unité de travail selon la revendication 2, **caractérisée en ce que** les préhenseurs (43) sont poussés en position de serrage via un ensemble de rondelles Belleville (41) agissant à la tige de serrage (42), et sont déplaçables en une position de desserrage via un piston (45) disposé au niveau de la tige de serrage.

4. Unité de travail selon la revendication 2 ou 3, **caractérisée en ce qu'**un élément de contrôle (46) agissant conjointement avec un capteur de proximité (47) est disposé à l'extrémité arrière de la tige de serrage (42) pour contrôler la position de serrage et de desserrage de l'unité de serrage (38).

5. Unité de travail selon l'une des revendications 2 à 4, **caractérisée en ce que** l'unité de serrage (38) est disposée dans un alésage central sur la plaque de raccordement (13).

6. Unité de travail selon l'une des revendications 1 à 5, **caractérisée en ce qu'**une gorge (33) est disposée sur l'une des deux pièces de raccordement (14) en vue de l'engrènement étanché par le biais d'une bague d'étanchéité (35) d'une entretoise (34) prévue sur l'autre pièce de raccordement (24).

7. Unité de travail selon l'une des revendications 1 à 6, **caractérisée en ce que** des fiches mâles électriques (29, 39) et des contre-fiches (31, 32) sont disposées sur les pièces de raccordement (14, 24) pour la transmission d'énergie et/ou de signal entre la tête de fraisage (1) et l'unité additionnelle (2).
